# EUROPEAN PATENT SPECIFICATION

(11) **EP 2 762 307 B1**
(45) Date of publication and mention of the grant of the patent: **27.04.2016**
(21) Application number: 12835074.1
(22) Date of filing: 21.09.2012
(51) Int. Cl.: B32B 27/32, B65D 65/46, C08L 3/02, C08L 23/06, C08L 67/00, C08L 101/16, C08L 23/08, C08L 23/22

(54) **STRETCH FILM PRODUCT**
DEHNFOLIENPRODUKT
PRODUIT DE FILM ÉTIRABLE

(30) Priority: 26.09.2011 JP 2011208454
(43) Date of publication of application: 06.08.2014
(73) Proprietor: KRH & Co. Ltd., Gifu 503-0212 (JP)
(72) Inventor: NAITO, Kentaro, Gifu 5030212 (JP); AOYAMA, Koji, Gifu 5030212 (JP); AOYAMA, Hideyo, Gifu 5030212 (JP)
(74) Representative: Evans, Huw David Duncan
(86) International application number: PCT/JP2012/006016
(87) International publication number: WO 2013/046615

(56) References cited:
- JP-A- H06 313 063
- JP-A- H10 152 602
- JP-A- H10 195 306
- JP-A- 2003 276 123
- JP-A- 2005 008 869

## Description

### Technical Field

The present invention relates to a stretch film product. Especially, the present invention relates to a stretch film product for packaging pasture grass silage.

### Background Art

"Pasture grass silage" is known as one kind of livestock feed. This is a kind of feed obtained by storing early-harvested pasture grass in a silo or the like and fermenting the grass therein. Early-harvested pasture grass is generally bundled into rolls, and a stretch film is used as a pasture grass packaging material at that time. Conventionally, stretch films for packaging pasture grass silage have been made of a pure synthetic resin such as polyethylene (PE). However, in recent years, regulations which prohibit the incineration of waste plastics in principle have been established in some local authorities (for example, Okinawa prefecture in JAPAN), and a fine is sometimes imposed on persons who violate such regulations. Such regulations have been established for the purpose of preventing/suppressing the generation of dioxins.

However, these incineration prohibiting regulations are actually applied to waste stretch films which are used as agricultural materials without exception, and pasture grass suppliers suffer from the absurd thing that they are forced to pay a huge fine for each incineration of used stretch films. Therefore, there is a need for stretch film products for packaging pasture grass silage capable of being disposed of, for example, degraded and restored to the soil without incineration.

By the way, there have been proposed films (products) for packaging materials or agricultural materials employing a resin known to be biodegradable. For example, Patent Document 1 (JP 2009-108264 A) discloses a resin composition comprising as main components an aliphatic polyester resin (A) and a polyethylene-based resin (B) in a mass ratio (A)/[(A) + (B)] of 0.50 or more and 0.99 or less, and a molded body and a film each comprising the resin composition. Patent Document 1 indicates polybutylene succinate adipate (PBSA) -based resin as an example of the aliphatic polyester resin (A) (see claim 8 of this document). PBSA is known as a biodegradable resin. Also, Patent Document 1 explains, as the reason why the above-described mass ratio is defined as 0.50 or more, that "too low a ratio (A)/[(A) + (B)] is not preferable as failing to provide sufficient elongation at break" (see paragraph [0050] of the document).

### Prior Art Document

### Patent Document

Patent Document 1: JP 2009-108264 A

### Summary of Invention

### Problem to Be Solved by the Invention

The present inventors experimentally produced a stretch film product for packaging pasture grass silage using a resin mixture (PBSA + PE, provided that the mixture is rich in PBSA) of the same system as that disclosed in Patent Document 1 to conduct an experiment for confirming whether the product embedded in the soil was biodegraded or not. In this experiment, the PBSA portion of the resin mixture was observed to disappear by biodegradation, but white residues, which seemed to be derived from PE (polyethylene), were not degraded and still remained. Complete disappearance as expected was not observed. In the meantime, some people propose using a resin made of 100% aliphatic polyester such as PBSA to produce a stretch film product. However, films made of 100% aliphatic polyester generally have insufficient stretchability (elasticity) and thus cannot endure the use as a film for packaging pasture grass silage. The present invention has been made in light of such circumstances.

An object of the present invention is to provide a stretch film product with which the film itself has consistent stretchability (elasticity) and the entire film can be subjected to waste treatment by biodegradation without being incinerated at the time of waste disposal. Especially, the present invention aims at providing a stretch film product suitable for pasture grass silage packaging applications.

### Means for Solving the Problem

After much trial and error, the present invention has been made based on the novel discovery that three components, i.e., a polyester biodegradable resin, a rice starch and polybutene can be used in combination to realize biodegradation in the form of involving polyethylene as well.

Specifically, the present invention relates to a stretch film product having a layer adhered on at least one surface of a base film,
wherein the base film contains a resin blend (A + B), which is produced by blending a polyester biodegradable resin (A) and polyethylene (B), that further contains a starch or a starch derivative, and the blending ratio [B/(A + B)] of the polyethylene (B) in the resin blend (A + B) is 60% to 90%, and
wherein the adhered layer comprises a binder resin and polybutene.

### Effect of the Invention

According to the present invention, desired stretchability (elasticity) can be imparted to the base film itself by using polyethylene (B) in addition to the polyester biodegradable resin (A) as the resins which constitute the base film.

Additionally, although the blending ratio [B/ (A + B)] of the polyethylene (B) in the resin blend (A + B) constituting the base film is 60% to 90%, which is a state of being rich in polyethylene as compared to the polyester biodegradable resin, it becomes possible to allow the biodegradative action of microorganisms such as bacteria or polymer decomposing enzymes to simultaneously spread over polyethylene due to the synergistic action of three components: a polyester biodegradable resin which has biodegradability itself, a starch or a starch derivative contained in the base film, and polybutene contained in the adhered layer. Therefore, in the waste disposal of the stretch film product according to the present invention, a major part of the mass thereof can be caused to disappear by biodegradation, without need for incineration, only by leaving the product as it is, for example, embedding the product in the soil.

### Modes for Carrying out the Invention

Hereinafter, preferred embodiments of the present invention will be explained in detail.

The stretch film product according to the present invention has a base film and an adhered layer formed on at least one surface of the base film.

### [Materials which constitute base film]

The base film is obtained by incorporating a starch or a starch derivative in a resin blend (A + B), as a basic material, which is produced by blending a polyester biodegradable resin (A) and polyethylene (B).

The polyester biodegradable resin (A) is preferably "an aliphatic polyester resin comprising an aliphatic diol and an aliphatic dicarboxylic acid as main raw materials" or "an aliphatic/aromatic mixed polyester resin comprising an aliphatic diol, an aliphatic dicarboxylic acid and an aromatic dicarboxylic acid as main raw materials."

Here, the aliphatic diol component which gives a "diol" unit in the polymeric chain is not especially limited, but is preferably an aliphatic diol component having 3 to 10 carbon atoms, especially preferably an aliphatic diol component having 4 to 6 carbon atoms. Specifically, 1,3-propanediol, 1,4-butanediol, 1,4-cyclohexane dimethanol and the like are indicated as examples of the component, and, among others, 1, 4-butanediol is especially preferred. Two or more aliphatic diol components can also be used.

The dicarboxylic acid component which gives a "dicarboxylic acid" unit in the polymeric chain is not especially limited, but is preferably a dicarboxylic acid component having 3 to 10 carbon atoms. Specifically, succinic acid, adipic acid, suberic acid, sebacic acid, terephthalic acid (HOOC-C₆H₄-COOH) and the like are indicated as examples of the component, and, among others, succinic acid, adipic acid and terephthalic acid are especially preferred. Two or more dicarboxylic acid components can also be used.

Specific examples of polyester biodegradable resin (A): Poly(butylene adipate-co-terephthalate) (PBAT) is exemplified as the aliphatic/aromatic mixed polyester resin. Poly(butylene succinate-co-adipate) (PBSA) and poly(butylene succinate) (PBS) are exemplified as the aliphatic polyester resin. At least the polyester resins exemplified herein are *per se* biodegradable. Therefore, the use of one or a mixture of two or more selected from the group consisting of the polyester resins listed herein is very preferred.

The polyethylene (B) is preferably a low-density polyethylene having a density of 0.860 g/cm³ or more and 0.921 g/cm³ or less. While branch structures are generally observed at the molecular level in the low-density polyethylene, the polyethylene (B) used in the present invention is preferably "a low-density polyethylene having less branch structures" among polyethylenes, for example, most preferably a linear low-density polyethylene (LLDPE) as defined in JIS(Japanese Industrial Standards) K6899-1:2000. The reason for this is because the properties of the polyethylene used may greatly affect the properties of the stretch film as a product, and, additionally, because polymers having a molecular backbone having less branch structures and high linearity are more likely to undergo biodegradation by microorganisms such as bacteria.

In the resin blend (A + B) of a polyester biodegradable resin and polyethylene, the blending ratio of the polyethylene (B) [B/ (A + B)] ranges from 60% to 90% by weight (in that case, the blending ratio of the polyester resin (A) [A/ (A + B)] range from 40% to 10% by weight), more preferably ranges from 60% to 75%. When the blending ratio of the polyethylene [B/ (A + B)] is less than 60%, the resultant film product has insufficient stretchability and thus is not suitable, especially, as a stretch film for packaging pasture grass silage. On the other hand, when the blending ratio of the polyethylene [B/ (A + B)] exceeds 90%, the ratio of the polyester resin (A) becomes less than 10%, i.e., too small, and thus may obstruct simultaneous biodegradation of the polyethylene.

The resin blend additionally comprises a starch or a starch derivative. An esterified starch obtained by esterification of a starch with an organic acid or the like can be indicated as an example of the starch derivative. Specific examples of the esterified starch include an octenyl succinate esterified starch. These starches and starch derivatives function to promote the biodegradation of polyethylene in coordination with the polyester biodegradable resin (A) and polybutene which will be described later.

The content of the starch or starch derivative in the base film is an amount corresponding to 0.001 to 2 parts by weight (more preferably, 0.01 to 0.1 parts by weight) when the weight of the base film excluding the starch or starch derivative is defined as 100 parts by weight. An excessively low starch or starch derivative content results in the insufficient development of the polyethylene biodegradation promoting action. On the other hand, an excessively high starch or starch derivative content is not preferred since foams are generated in the base resin or base film (foaming phenomenon), thereby causing the deterioration in the tensile strength of the film.

### Additional Additives:

In addition to the starch or starch derivative, additional additives can be incorporated into the above-described resin blend (A + B). The additional additives include a master batch and a slipping agent. In the meantime, the amounts of the additional additives to be incorporated are not especially defined, but suitably range from 2% by weight to 4% by weight in the base material when the resin blend (A + B) and additional additives (except the starch or starch derivative) are collectively referred to as "base materials."

The master batch refers to a material obtained by increasing the concentration of a dye or pigment and adding the dye or pigment to a resin base, and is mainly used as a coloring material. In the meantime, a biodegradable resin is preferably used as the resin base which constitutes the master batch used in the present invention.

The slipping agent is used to improve the slipping of a base film for smooth inflation molding when the base film is formed by inflation molding as will be described below. The slipping agent includes fatty acid amides such as stearic acid monoamide, ethylenebis-stearic acid amide, oleic acid monoamide and ethylenebis-oleic acid amide.

### [Method for molding base film]

The base film is formed by extrusion molding a resin blend (A + B), as a raw material, comprising a starch or a starch derivative and additional additives according to need. Available extrusion molding methods include inflation molding method and T-die molding method, and, among others, the inflation molding method is most preferably used. The "inflation molding method" refers to a method comprising extruding a heated/molten resin raw material into a cylindrical shape, blowing air thereinto to inflate the material like a balloon into a tubular shape, folding this in two, rolling it up, and cutting it in an appropriate length, thereby producing a film product.

### [Adhered layer]

An adhered layer formed on a surface of the base film comprises a binder resin and polybutene.

The binder resin refers to a polymer having the function as a binding material or binding aid for adhering polybutene to a surface of the base film. The binder resin must be adhered to the base film surface while involving polybutene, and thus preferably has certain plasticity or film forming property (for example, the glass transition temperature Tg is around ordinary room temperature). On the other hand, a resin which imparts excessive stickiness at such a level that one feels the exposed surface of the stretch film product sticky is not so preferred as the binder resin as impairing the commercial value of the film product. Also, the binder resin preferably has both heat resistance and water resistance to some extent, since it is adhered to a surface of the base film. The binder resin which satisfies the conditions as described above is preferably an acrylic resin. The acrylic resin refers to a homopolymer or copolymer comprising, as its main raw material, an acrylic monomer such as acrylic acid, acrylic acid ester, methacrylic acid, methacrylic acid ester or acrylamide. The acrylic resin is preferably an acrylic resin in the form of a water-dispersible emulsion since the resin in the form of a water-dispersible type emulsion is convenient to handle.

The polybutene is polybutene of CAS No. 9003-29-6. The polybutene promotes biodegradation of polyethylene in cooperation with the polyester biodegradable resin (A) and the above-described starch or starch derivative.

In the meantime, the reason why the polybutene component is post-added (post-adhered) to a surface of the base film without being preliminarily added to the above-described resin blend together with the starch or starch derivative is because polybutene, when preliminarily added to the resin blend and heated/molten for extrusion molding, would be degraded or changed in quality by heat during the heating/melting, and thus cannot exert the biodegradative action at a later date (see Comparative Example 4 which will be given below).

The content of the polybutene in the adhered layer is sufficiently equivalent to that of the starch or starch derivative. Specifically, the polybutene content is an amount corresponding to 0.001 to 2 parts by weight (more preferably, 0.01 to 0.1 parts by weight) when the weight of the base film excluding the starch or starch derivative is defined as 100 parts by weight. An excessively low polybutene content cannot sufficiently develop the action of promoting the biodegradation of polyethylene. On the other hand, when the polybutene content is excessively high, an excessive amount of polybutene may act on the polymer in the base film and deteriorate this polymer, thereby reducing the strength of the base film.

### [Method for forming adhered layer]

The adhered layer may be formed by any methods, but is preferably formed by "preparing an emulsion liquid obtained by incorporating polybutene into an emulsion in which an acrylic resin is water-dispersed, adhering this emulsion liquid to a surface of the above-described base film obtained by extrusion molding, and drying it." Here, the reason why the material for the adhered layer is handled in the form of an emulsion liquid comprising polybutene is because such a form is easily made to have "low viscosity/high solid content" as compared with the form of a resin solution and can smoothly carry out adhesion of the polybutene component onto the base film surface. Specific ways for adhesion of the polybutene component onto the base film surface include a method comprising wetting one surface of the base film on the surface of the emulsion liquid, a method comprising passing the base film through the emulsion liquid as it is and a method comprising spray coating the emulsion liquid on one or both surfaces of the base film.

### Examples

Example 1 according to the present invention and Comparative Examples 1 to 5 to be compared with the present invention will now be explained.

The following materials were used as materials constituting a base film.

As a polyester biodegradable resin (A), polybutylene adipate terephthalate (PBAT) (manufactured by Korean Samsung Fine Chemicals Co., Ltd.: EnPol PGB7070F) and polybutylene succinate adipate (PBSA) (manufactured by Mitsubishi Chemical Corporation: GS Pla AD92WN) were used in combination.

As polyethylene (B), a linear low-density polyethylene (LLDPE) (manufactured by Japan Polyethylene Corporation: Kernel, density: 0.898 g/cm³) was used.

As additives, a white master batch manufactured by Dainichiseika Color & Chemicals Mfg. Co., Ltd. and stearic acid monoamide (manufactured by NOF Corporation: ALFLOW S-10) as a slipping agent were used.

As a starch derivative, 2-alkenyl succinic esterified starch (manufactured by Nippon Starch Chemical Co., Ltd.: Nyuka) was used.

The following materials were used as materials constituting an adhered layer. Specifically, Rika Bond AP-96 manufactured by CSC Co., Ltd. (nonvolatile content: about 54%) was used as an acrylic resin emulsion. As a supply source of polybutene, Emawet 30H manufactured by NOF Corporation (polybutene: 71% to 77%; poly(oxyethylene)alkyl ether: about 3% to 4%; balance: water) was used. Fifty (50) parts by weight of Rika Bond AP-96 was diluted about twice with about 50 parts by weight of water, and about 0.01 parts by weight of Emawet 30H was incorporated therein, thereby preparing/providing an emulsion liquid.

### [Example 1]

The above-described LLDPE, PBAT, PBSA, white master batch, slipping agent and starch derivative were mixed and kneaded in a blending ratio as indicated in Table 1 blow, and the resultant mixture was formed into resin pellets. Then, the resin pellets were put, in a heated/molten state, in an inflation molding machine, thereby giving a cylindrical film having a thickness of 0.025 mm, and the film was cut (cutting processing) to form a planar film. One surface of this planar film was brought into contact with the liquid surface of the emulsion liquid prepared/provided as described above to be wetted, and thereafter naturally dried, thereby forming an adhered layer (i.e., layer comprising polybutene bound with an acrylic resin) on one surface of a base film. This trial stretch film product was referred to as Example 1.

### [Comparative Examples 1 to 5]

Comparative Examples 1 to 5 are films experimentally produced in similar procedures to those employed in Example 1, but different from Example 1 in blending formulation as indicated in Table 1. Specifically:
Comparative Example 1 corresponds to a product produced without adding any starch derivative to the base film in Example 1;
Comparative Example 2 corresponds to a product produced without adding any polybutene to the adhered layer in Example 1;
Comparative Example 3 corresponds to a product produced without adding any starch derivative to the base film in Example 1 and without adding any polybutene to the adhered layer in Example 1;
Comparative Example 4 is a case where polybutene was also kneaded simultaneously with a starch derivative when the raw materials for the base film were kneaded, and corresponds to a product prepared without adding polybutene to the adhered layer; and
Comparative Example 5 corresponds to a product obtained by removing PBAT and PBSA from Example 1, namely, a product comprising a base film completely free of a polyester biodegradable resin (A).

### [Degradability Test]

The sample films (thickness: about 0.025 mm) of the above Example and Comparative Examples were each trimmed into a square shape of 300 mm in length x 300 mm in width, and experiments for confirming the biodegradability were carried out using the square samples. Under normal circumstances, the respective sample films should be embedded in the soil to observe the course of biodegradation over several months, but, for shortening of the testing time, the confirmatory experiment was carried out under degradation promoting conditions by use of a commercially available domestic garbage disposer (manufactured by Hitachi, Ltd.: Kitchen Magic/ Model BGD-X150). Specifically, a rice-bran paste (nuka-doko) with yeast designated by the same disposer marker was put in the garbage disposer, and the temperature was set to about 40°C to measure the changes in weights of the respective sample films embedded in the nuka-doko with time. Table 2 given below indicates the changes in weights of the respective samples up to the time point at which 59 hours have passed from the start of measurement.

**[Table 1]**

| Blending Formulation | | | | | | | |
|---|---|---|---|---|---|---|---|
| (Numerical values are parts by relative weight as converted in terms of solid content) | | | | | | | |
| | | Example 1 | Comparative Example 1 | Comparative Example 2 | Comparative Example 3 | Comparative Example 4 | Comparative Example 5 |
| | L L D P E | 70 | 70 | 70 | 70 | 70 | 70 |
| | P B A T | 17 | 17 | 17 | 17 | 17 | - |
| | P B S A | 10 | 10 | 10 | 10 | 10 | - |
| Base Film | White Master Batch | 2 | 2 | 2 | 2 | 2 | 2 |
| | Slipping Agent | 1 | 1 | 1 | 1 | 1 | 1 |
| | Starch Derivative | 0.01 | None | 0.01 | None | 0.01 | 0.01 |
| | Others | | | | | Poly-butene 0.01 | |
| Adhered Layer | Acrylic Resin | 27 | 27 | 27 | 27 | 27 | 27 |
| | Poly-butene | 0.01 | 0.01 | None | None | None | 0.01 |

**[Table 2]**

| Results of Degradability Test (unit: gram) | | | | | | |
|---|---|---|---|---|---|---|
| | Example 1 | Comparative Example 1 | Comparative Example 2 | Comparative Example 3 | Comparative Example 4 | Comparative Example 5 |
| Start time | 2.370 | 2.340 | 2.275 | 2.330 | 2.360 | 2.40 |
| After 7 hours | 3.715 | 3.370 | 3.367 | 3.933 | 2.350 | 2.40 |
| After 14 hours | 3.263 | 3.295 | 2.825 | 3.217 | 2.880 | 2.40 |
| After 22 hours | 2.190 | 2.272 | 2.029 | 2.372 | 2.128 | 2.40 |
| After 32 hours | 1.048 | 0.660 | 0.977 | 0.685 | 0.980 | 2.40 |
| After 38 hours | 0.629 | 0.580 | 0.647 | 0.670 | 0.651 | 2.40 |
| After 44 hours | 0.361 | 0.350 | 0.384 | 0.188 | 0.392 | 2.40 |
| After 49 hours | 0.123 | 0.121 | 0.166 | 0.130 | 0.173 | 2.40 |
| After 54 hours | 0.039 | 0.061 | 0.018 | 0.081 | 0.072 | 2.40 |
| After 59 hours | 0.000 | 0.058 | 0.016 | 0.067 | 0.032 | 2.40 |
| Evaluation | Disappear | Not disappear | Not disappear | Not disappear | Not disappear | Not disappear |

### [Consideration]

From the blending formulation indicated in Table 1 and the test results shown in Table 2, the following facts have been revealed.
(1) When three components, a polyester biodegradable resin (PBAT and PBSA), a starch derivative and polybutene, were used in combination, the biodegradation of the entire film including a polyethylene (LLDPE) component as well could be promoted. The biodegradative action could not be sufficiently promoted in the absence of any one of the polyester biodegradable resin, starch derivative and polybutene.
(2) Polybutene, even if preliminarily blended together with the starch derivative in the base film, cannot exert sufficient biodegradative action. Polybutene is allowed to be present in a form of being adhered onto the surface of the base film, so that it can sufficiently exert the biodegradative action in cooperation with the polyester biodegradable resin and starch derivative.

## Claims

1. A stretch film product having a layer adhered on at least one surface of a base film,
wherein the base film contains a resin blend (A + B), which is produced by blending a polyester biodegradable resin (A) and polyethylene (B), that further contains a starch or a starch derivative, and the blending ratio [B/(A + B)] of the polyethylene (B) in the resin blend (A + B) is 60% to 90%, and
wherein the adhered layer comprises a binder resin and polybutene.

2. The stretch film product according to claim 1, wherein the content of the starch or starch derivative in the base film is an amount corresponding to 0.001 to 2 parts by weight when the weight of the base film excluding the starch or starch derivative is defined as 100 parts by weight.

3. The stretch film product according to claim 1 or 2,
wherein the polyethylene (B) is a linear low-density polyethylene (LLDPE),
wherein octenyl succinate esterified starch is used as the starch or starch derivative, and
wherein a water-dispersible emulsion type acrylic resin is used as the binder resin.

4. The stretch film product according to any one of claims 1 to 3,
wherein the polyester biodegradable resin (A) is one or a mixture of two or more selected from the group consisting of polybutylene adipate terephthalate (PBAT), polybutyrene succinate adipate (PBSA) and polybutylene succinate (PBS).

5. The stretch film product according to any one of claims 1 to 4,
wherein the base film is a film formed by inflation molding a resin blend (A + B), as a raw material, comprising a starch or a starch derivative, and
wherein the adhered layer is a layer obtained by adhering an emulsion liquid obtained by incorporating polybutene in an emulsion in which an acrylic resin is water-dispersed to a surface of the base film obtained by inflation molding, and drying it.

6. The stretch film product according to any one of claims 1 to 5, which is a stretch film product for packaging pasture grass silage.

## Patentansprüche

1. Dehnfolienprodukt mit einer Schicht, die an wenigstens einer Oberfläche einer Basisfolie anhaftet,
wobei die Basisfolie eine Harzmischung (A + B) umfasst, die hergestellt wird, indem ein biologisch abbaubares Polyesterharz (A) und Polyethylen (B) gemischt werden, und die ferner eine Stärke oder ein Stärkederivat enthält, und wobei das Mischverhältnis [B/(A + B)] von Polyethylen (B) in der Harzmischung (A + B) 60% bis 90% beträgt, und
wobei die anhaftende Schicht ein Trägerharz und Polybuten umfasst.

2. Dehnfolienprodukt nach Anspruch 1,
wobei der Anteil der Stärke oder des Stärkederivats in der Basisfolie eine Menge ist, die 0,001 bis 2 Gewichtsteilen entspricht, wenn das Gewicht der Basisfolie exklusive der Stärke oder des Stärkederivats als 100 Gewichtsteile definiert wird.

3. Dehnfolienprodukt nach Anspruch 1 oder 2,
wobei das Polyethylen (B) ein lineares Polyethylen niedriger Dichte (LLDPE) ist,
wobei veresterte Octenylsuccinatstärke als Stärke oder Stärkederivat verwendet wird und
wobei eine in Wasser dispergierbare Emulsion vom Typ Acrylharz als Trägerharz verwendet wird.

4. Dehnfolienprodukt nach einem der Ansprüche 1 bis 3,
wobei es sich bei dem biologisch abbaubaren Polyesterharz (A) um ein Material oder eine Mischung aus zwei oder mehr Materialien handelt, die aus der Gruppe ausgewählt sind, die aus Polybutylenadipatterephthalat (PBAT), Polybutylensuccinatadipat (PBSA) und Polybutylensuccinat (PBS) besteht.

5. The Dehnfolienprodukt nach einem der Ansprüche 1 bis 4,
wobei es sich bei der Basisfolie um eine Folie handelt, die durch Blasformen einer Harzmischung (A + B) als Ausgangsmaterial hergestellt wurde, die eine Stärke oder ein Stärkederivat enthält, und
wobei es sich bei der anhaftenden Schicht um eine Schicht handelt, die hergestellt wird, indem eine Emulsionsflüssigkeit, die hergestellt wird, indem Polybuten in eine Emulsion eingebracht wird, in der ein Acrylharz in Wasser dispergiert ist, auf eine Oberfläche der Basisfolie aufgebracht wird, die durch Blasformen gebildet wurde, und indem diese getrocknet wird.

6. Dehnfolienprodukt nach einem der Ansprüche 1 bis 5, wobei es sich um ein Dehnfolienprodukt zum Verpacken von Weidegrassilage handelt.

## Revendications

1. Produit de film étirable comportant une couche collée sur au moins une surface d'un film de base,
dans lequel le film de base contient un mélange de résines (A + B), qui est produit en mélangeant une résine biodégradable de polyester (A) et du polyéthylène (B), qui contient en outre un amidon ou un dérivé d'amidon, et le rapport de mélange [B/ (A + B)] du polyéthylène (B) dans le mélange de résines (A + B) est de 60 % à 90 %, et
dans lequel la couche collée comprend une résine liante et du polybutène.

2. Produit de film étirable selon la revendication 1,
dans lequel la teneur de l'amidon ou du dérivé d'amidon dans le film de base est une quantité correspondant à 0,001 à 2 parties en poids lorsque le poids du film de base à l'exclusion de l'amidon ou du dérivé d'amidon est défini comme étant de 100 parties en poids.

3. Produit de film étirable selon la revendication 1 ou 2,
dans lequel le polyéthylène (B) est un polyéthylène linéaire, basse densité (LLDPE),
dans lequel de l'amidon estérifié par du succinate d'octényle est utilisé en tant qu'amidon ou dérivé d'amidon, et
dans lequel une résine acrylique de type émulsion dispersible dans l'eau est utilisée en tant que résine liante.

4. Produit de film étirable selon l'une quelconque des revendications 1 à 3,
dans lequel la résine biodégradable de polyester (A) est un composé ou un mélange de deux ou plusieurs composés choisis dans le groupe constitué de l'adipate-téréphtalate de polybutylène (PBAT), du succinate-adipate de polybutyrène (PBSA) et du succinate de polybutylène (PBS).

5. Produit de film étirable selon l'une quelconque des revendications 1 à 4,
dans lequel le film de base est un film formé par moulage par soufflage d'un mélange de résines (A + B), en tant que matière première, comprenant un amidon ou un dérivé d'amidon, et
dans lequel la couche collée est une couche obtenue par collage d'un liquide sous forme d'émulsion obtenu par incorporation de polybutène dans une émulsion dans laquelle une résine acrylique est dispersée dans l'eau sur une surface du film de base obtenu par moulage par soufflage, et séchage de celui-ci.

6. Produit de film étirable selon l'une quelconque des revendications 1 à 5, qui est un produit de film étirable pour l'emballage du fourrage ensilé d'herbe de pâturage.
